# EUROPEAN PATENT APPLICATION

(11) **EP 4 764 447 A1**
(43) Date of publication of application: **24.06.2026**
(21) Application number: 24872051.8
(22) Date of filing: 19.09.2024
(51) Int. Cl.: G01N 1/04, B28B 11/14, B28B 13/04, G01N 1/28, G01N 21/88, G01N 21/956

(54) **SAMPLING APPARATUS, APPARATUS FOR MANUFACTURING PLATE MEMBER, AND APPARATUS FOR MANUFACTURING GYPSUM BUILDING MATERIAL**

(30) Priority: 29.09.2023 JP 2023169830
(71) Applicant: Yoshino Gypsum Co., Ltd., Tokyo 100-0005 (JP)
(72) Inventor: MIYAJIMA, Toshiyuki, Tokyo 100-0005 (JP); KANO, Shota, Tokyo 100-0005 (JP); KAWAHARA, Yoshihito, Tokyo 100-0005 (JP)
(74) Representative: Ter Meer Steinmeister & Partner
(86) International application number: PCT/JP2024/033546
(87) International publication number: WO 2025/070260

(57) **Abstract**

A sampling apparatus includes: a support apparatus configured to support a sheet piece from below, the sheet piece being conveyed by a conveying apparatus; and a displacement apparatus configured to displace a position of the support apparatus along a height direction, in which the support apparatus includes: a connection member having a columnar shape, a plurality of support members having a columnar shape, the support members arranged along a longitudinal direction of the connection member, and a counterweight provided to the connection member,
the support members are disposed so that the longitudinal direction of the connection member intersects a longitudinal direction of the support members, the support members have first ends along the longitudinal direction of the support members, and second ends located opposite the first ends, the first ends are fixed to the connection member, and the counterweight is disposed opposite the second ends of the support members, with reference to a position of the connection member.

## Description

### TECHNICAL FIELD

The present invention relates to a sampling apparatus, a sheet member manufacturing apparatus, and a gypsum building material manufacturing apparatus.

### BACKGROUND ART

Patent Document 1 discloses a sampling apparatus having a lifting means for lifting a sheet piece upward above a conveying path for the sheet piece from below the conveying path, the sheet piece being conveyed by a conveying means, and a retaining means for retaining the sheet piece lifted upward by the lifting means.

### CITATION LIST

### PATENT LITERATURE

Patent Document 1: International Publication WO 2018/193942

### SUMMARY OF THE INVENTION

### PROBLEM TO BE SOLVED BY THE INVENTION

Sheet-shaped products containing, as raw materials, inorganic materials such as ceramics or metals, or organic and polymer materials such as resins, are continuously manufactured, for example, by forming the raw materials into a continuous strip shape, and then, while conveying the formed body, performing various operations such as cutting and drying as necessary.

Then, at a desired timing or a predetermined timing, for example, an operator samples a semi-finished product or a part of a finished product being conveyed to evaluate whether semi-finished products or the like are being manufactured in conformity with prescribed standards. However, since semi-finished products or the like are usually conveyed continuously, depending on the conveying speed, size, or weight of the semi-finished products, manual sampling by an operator sometimes requires skilled techniques.

Therefore, the applicant has invented the sampling apparatus disclosed in Patent Document 1.

However, the sampling apparatus disclosed in Patent Document 1 requires at least two members, the lifting means and the retaining means. Therefore, a large installation space is required, and depending on the length of the manufacturing line or the like, installation of the sampling apparatus may be difficult.

In light of the above problems of the related art, an object of an aspect of the present invention is to provide a sampling apparatus capable of easily sampling a sheet piece being conveyed and reducing the installation space.

### MEANS FOR SOLVING THE PROBLEM

According to an embodiment of the present invention, a sampling apparatus is provided in order to solve the above-described problem, the sampling apparatus including:
a support apparatus configured to support a sheet piece from below, the sheet piece being conveyed by a conveying apparatus; and
a displacement apparatus configured to displace a position of the support apparatus along a height direction, in which
the support apparatus includes
   a connection member having a columnar shape,
   a plurality of support members having a columnar shape, the support members arranged along a longitudinal direction of the connection member, and
   a counterweight provided to the connection member,
the support members are disposed such that the longitudinal direction of the connection member intersects a longitudinal direction of the support members,
the support members have first ends along the longitudinal direction of the support members, and second ends located opposite the first ends, the first ends are fixed to the connection member, and
the counterweight is disposed opposite the second ends of the support members, with reference to a position of the connection member.

### ADVANTAGEOUS EFFECTS OF THE INVENTION

According to an embodiment of the present invention, it is possible to provide a sampling apparatus capable of easily sampling a sheet piece being conveyed and reducing the installation space.

### BRIEF DESCRIPTION OF THE DRAWINGS

[FIG. 1] FIG. 1 is an explanatory view of a sampling apparatus according to an embodiment of the present disclosure.
[FIG. 2] FIG. 2 is a top view of the sampling apparatus according to the embodiment of the present disclosure.
[FIG. 3] FIG. 3 is a side view of the sampling apparatus according to the embodiment of the present disclosure.
[FIG. 4] FIG. 4 is a side view of the sampling apparatus according to the embodiment of the present disclosure.
[FIG. 5] FIG. 5 is an explanatory view of a gypsum building material manufacturing apparatus according to an embodiment of the present disclosure.

### DESCRIPTION OF THE EMBODIMENTS

Hereinafter, embodiments of the present invention will be described with reference to the drawings. However, the present invention is not limited to the following embodiments, and various modifications and substitutions may be made to the following embodiments without departing from the scope of the present invention.

In this specification, ordinal terms such as "first" and "second" may be added to the names of members for convenience of explanation. For example, members may be referred to herein as a first moving apparatus and a second moving apparatus. The ordinal terms "first" and "second" are used merely to distinguish the members from each other and to prevent confusion in the description, and do not indicate any particular arrangement or priority. When no confusion is likely to arise, or when the members are referred to collectively, they may simply be referred to as a "moving apparatus."

### [Sampling Apparatus]

A configuration example of a sampling apparatus according to the present embodiment will be described.

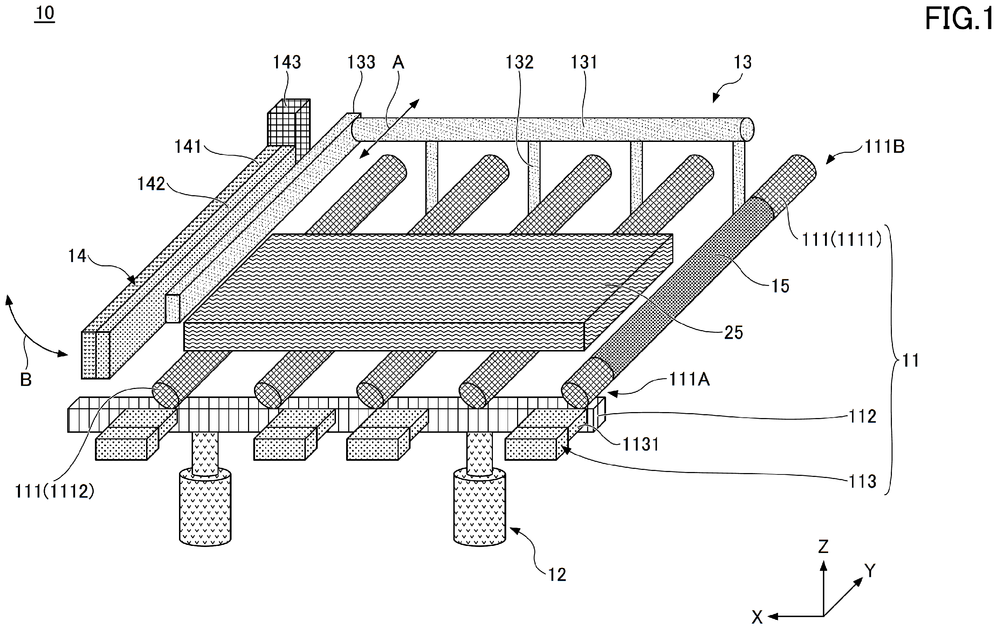

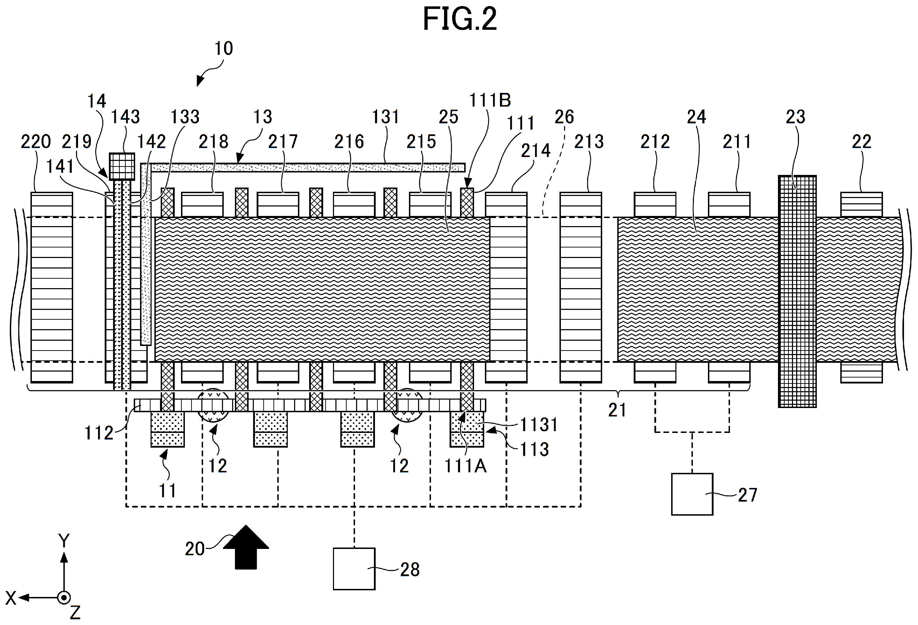

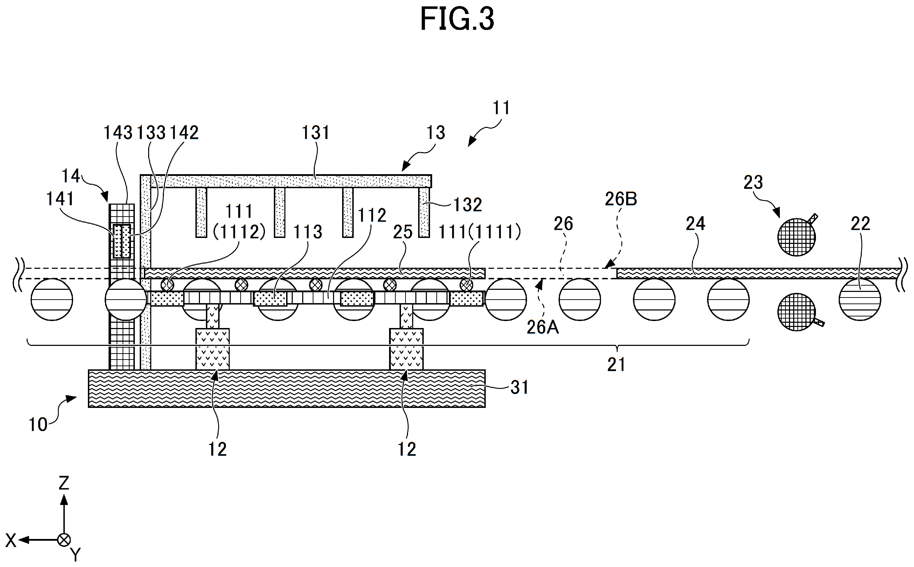

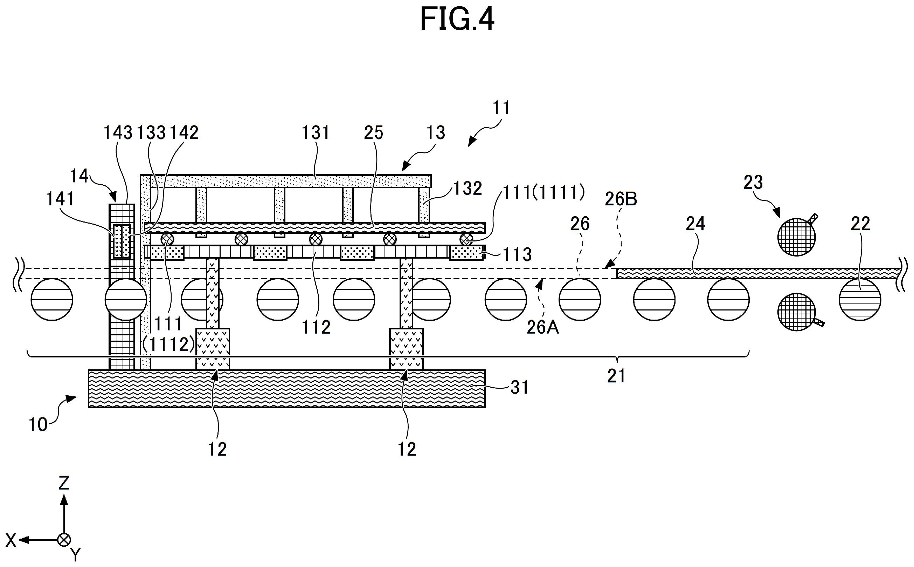

FIG. 1 is a perspective view of a sampling apparatus 10 according to the present embodiment. In FIG. 1, illustration of a conveying apparatus 21 is omitted. FIG. 2 is a top view illustrating a case where the sampling apparatus 10 of the present embodiment is installed on a conveying path 26 for a sheet piece 25. FIGS. 3 and 4 are side views taken along a block arrow 20 in FIG. 2. FIG. 3 illustrates a state before the position of a support apparatus 11 is raised by a displacement apparatus 12, and FIG. 4 illustrates a state after the position of the support apparatus 11 is raised by the displacement apparatus 12.

In FIGS. 1 to 4, the X-axis is an axis extending along the conveying path 26 for the sheet piece 25, and the Y-axis is an axis extending along the width of the sheet piece 25. The Z-axis is an axis extending along the height direction.

As illustrated in FIG. 1, the sampling apparatus 10 of the present embodiment includes the support apparatus 11 configured to support the sheet piece 25 being conveyed by the conveying apparatus 21 (see FIG. 2) from below the sheet piece 25, and the displacement apparatus 12 configured to displace the position of the support apparatus 11 along the height direction.

### (1) Conveying Apparatus and Sheet Piece

First, the sheet piece 25 to be sampled by the sampling apparatus 10 of the present embodiment and the conveying apparatus 21, on which the sampling apparatus 10 of the present embodiment is installed and which is configured to convey the sheet piece 25, will be described.

### (Conveying Apparatus)

As illustrated in FIGS. 2 to 4, the conveying apparatus 21 is not particularly limited provided that the conveying apparatus 21 is an apparatus capable of conveying the sheet piece 25, that is, a sheet-shaped semi-finished or finished product, and allows the support apparatus 11 to be disposed on the conveying apparatus 21. However, it is preferable that the conveying apparatus 21 be a means capable of conveying the sheet piece 25 in a horizontal direction. An apparatus used as the conveying apparatus 21 is not particularly limited. However, it is preferable to use an apparatus in which, when the position of the support apparatus 11 is displaced by the displacement apparatus 12, a support member 111 does not interfere with a movable portion of the conveying apparatus 21, specifically a portion that is driven to convey the sheet piece 25. For example, a roller conveyor or a chain conveyor can be preferably used as the conveying apparatus 21. The roller conveyor can be more preferably used as the conveying apparatus 21.

The chain conveyor means a conveyor in which at least two rows of chains are wound around a plurality of rollers, and the chains are rotated by rotating the rollers to convey the sheet piece with the chains.

As illustrated in FIGS. 2 to 4, the roller conveyor means a conveyor in which a plurality of rollers 211 to 220 are arranged, the sheet piece 25 is supported by the rollers 211 to 220, and the sheet piece 25 is conveyed by rotating the rollers 211 to 220. Due to space limitations, the individual rollers are denoted by reference signs only in FIG. 2.

The configuration of the conveying apparatus 21 may differ between a portion where the support apparatus 11 is installed and other portions. For example, the configuration of the conveying apparatus 21 may be such that a roller conveyor is provided at an installation position of the support apparatus 11, and belt conveyors are provided upstream and downstream of the roller conveyor in the conveying apparatus 21.

The configuration of the sampling apparatus 10 of the present embodiment may omit the conveying apparatus 21 and may include the support apparatus 11, the displacement apparatus 12, and the like described below. However, the sampling apparatus 10 may also be defined to include the above-described conveying apparatus 21.

### (Sheet Piece)

The sheet piece 25 is not particularly limited provided that the sheet piece 25 has a sheet shape. Examples of the sheet piece 25 include sheet-shaped semi-finished or final products that contain, as raw materials, inorganic materials such as ceramics or metals, or organic and polymer materials such as resins. More specifically, examples of the sheet piece 25 include gypsum building materials described later.

Moreover, the size and the like of the sheet piece 25 are not particularly limited. Note that the sheet piece 25 to be sampled and other sheet pieces 25 may be the same or different in size.

The size of the sheet piece 25, that is, the width and length of the sheet piece 25, can be determined as appropriate depending on the type, physical properties, and the like of the semi-finished or finished product. For example, in the case of building materials, the width is preferably 450 mm to 1,600 mm, and the length is more preferably 3,500 mm to 22,500 mm. The thickness of the sheet piece 25 is not particularly limited. However, if the sheet piece 25 is excessively thin or excessively thick, it may be difficult to convey the sheet piece 25 by the conveying apparatus 21. Therefore, for example, the thickness is preferably 1 mm to 50 mm.

As described above, when only the sheet piece 25 to be sampled is different in size from other sheet pieces that are not to be sampled, for example, only the length of the sheet piece 25 to be sampled may be set to a value from 1/30 to 4/5 of the length of the sheet pieces that are not to be sampled. In this case, the size of the sheet pieces not to be sampled can be, for example, within the range mentioned above.

The conveying path 26 is a region through which the sheet piece 25 is conveyed by the conveying apparatus 21, the region being defined in correspondence with the lower surface, upper surface, and opposite side edges in the width direction of the sheet piece 25. In the conveying path 26, a surface particularly defined by the lower surface of the sheet piece 25 being conveyed, that is, a surface in contact with the conveying apparatus 21, is also referred to as a lower surface 26A of the conveying path 26. A surface defined by the upper surface of the sheet piece 25 being conveyed is also referred to as an upper surface 26B of the conveying path 26 (See FIGS. 3 and 4).

### (2) Support Apparatus

The support apparatus 11 includes a connection member 112 having a columnar shape, a plurality of support members 111 each having a columnar shape and arranged along a longitudinal direction of the connection member 112, that is, along the X-axis, and a counterweight 113 provided to the connection member 112.

Each member of the support apparatus 11 will be described.

### (2-1) Support Member

The support member 111 is a member that directly supports the sheet piece 25 from below the sheet piece 25, and may have a columnar shape. The term "columnar shape" may be used interchangeably with the term "rod-like shape." The term "columnar shape" as used herein does not have a strict geometrical meaning, and may, for example, include a shape having irregularities or the like on its surface for connection with the connection member 112.

The support member 111 may have a polygonal columnar shape such as a quadrangular columnar shape, or a cylindrical shape. The support apparatus 11 may include the plurality of support members 111, but it is not necessary that all the support members 111 have the same shape. The shapes of the support members 111 may be varied depending on the positions where the support members 111 are disposed or the like. For example, in order to prevent scratches or the like on the sheet piece 25 to be sampled, a support member 1111 of the plurality of support members 111 that is disposed upstream in the conveying direction of the sheet piece 25 may be formed into a cylindrical (round rod) shape.

The material of the support member 111 is not particularly limited, and one or more materials selected from, for example, resins, metals, and the like may be used. However, depending on the mass or the like of the sheet piece 25, it is preferable that the support member 111 be highly rigid so as to be able to support the sheet piece 25. Accordingly, depending on the mass or the like of the sheet piece 25, the support member 111 may be made of metal, and stainless steel, aluminum, or the like may be used. In order to prevent excessive load from being applied to the displacement apparatus 12, the support member 111 may be formed to have a hollow structure inside or the like.

The support apparatus 11 may include the plurality of support members 111, and the support members 111 may be arranged along the longitudinal direction of the connection member 112. In the support apparatus 11 illustrated in FIG. 1, an example is illustrated in which five support members 111 are arranged along the longitudinal direction of the connection member 112. However, the present invention is not limited to such a configuration, and the number of the support members 111 can be selected depending on the size, weight, or the like of the sheet piece 25 to be sampled. The distances between the support members 111 that are arranged are not particularly limited, and may be equal to each other, for example. For example, in a region where a high load is applied when the sheet piece 25 is placed, the support members 111 may be disposed at a higher density by shortening the distances between the support members 111, so that the distances between the support members 111 differ depending on the region.

Each support member 111 has a first end 111A along the longitudinal direction, and a second end 111B located opposite to the first end 111A. Of the first end 111A and the second end 111B of the support member 111, the first end 111A is fixed to the connection member 112. Although the second end 111B is not particularly limited, the second end 111B may be a free end that is not fixed by a different member as illustrated in FIGS. 1 and 2.

The support member 111 can be disposed so that the longitudinal direction of the connection member 112 intersects the longitudinal direction of the support member 111, and it is preferable that the longitudinal directions of the connection member 112 and the support member 111 be arranged orthogonally. Note that the term "orthogonal" does not have a strict geometrical meaning, and covers any range that may be regarded as orthogonal. For example, when the angle between the longitudinal direction of the support member 111 and that of the connection member 112 is between 80 degrees and 100 degrees, the arrangement can be regarded as orthogonal.

The plurality of support members 111 can be accommodated between the rollers of the conveying apparatus 21 when the position of the support apparatus 11 is changed to its lowest position. For this reason, it is preferable that the plurality of support members 111 be arranged in parallel with each other so that the support members 111 do not interfere with the rollers of the conveying apparatus 21 and the like.

In FIGS. 1, 3, and 4, the plurality of support members 111 are disposed so as to be at the same height. However, the present invention is not limited to such a configuration. For example, the plurality of support members 111 may be disposed such that a support member 1112 located downstream in the conveying path 26 for the sheet piece 25 is positioned higher than the support member 1111 located upstream in the conveying path 26 for the sheet piece 25, and the support members 111 may be fixed to the connection member 112.

That is, the plurality of support members 111 may be disposed such that a surface, which is defined by the support members 111 and on which the sheet piece 25 is to be placed, becomes an inclined surface, and such that the support members 111 are positioned higher on the downstream side along the conveying path 26 for the sheet piece 25. By disposing the plurality of support members 111 so as to be positioned higher on the downstream side along the conveying path 26 for the sheet piece 25, an inclined surface, on which the sheet piece 25 is to be placed, can be defined by the plurality of support members 111 when the sheet piece 25 is sampled. Thus, when the sheet piece 25 is sampled by the sampling apparatus 10 of the present embodiment, it is possible to prevent the sheet piece 25, which is being conveyed by the conveying apparatus 21, from shifting out of alignment with the surface defined by the plurality of support members 111 due to inertia. This further ensures that the sampling apparatus 10 of the present embodiment can sample the sheet piece 25.

The support member 111 may also have a friction member 15 on at least a part of a portion in contact with the sheet piece 25. By providing the friction member 15, when the sheet piece 25 is sampled by the sampling apparatus 10 of the present embodiment, it is possible to prevent the sheet piece 25, which is being conveyed by the conveying apparatus 21, from shifting out of alignment with the surface defined by the plurality of support members 111 due to inertia. This further ensures that the sampling apparatus 10 of the present embodiment can sample the sheet piece 25.

The friction member 15 is not particularly limited, and any material capable of increasing the frictional force between the surface of the support member 111 and the sheet piece 25 as compared with the case where no friction member 15 is provided may be used. Examples of the material include rubber, fine powder, and the like. To avoid causing scratches on the surface of the sampled sheet piece 25, it is preferable to select the material of the friction member 15 in accordance with the material of the sheet piece 25.

### (2-2) Connection Member

The connection member 112 is a member for connecting and supporting the support member 111 and the counterweight 113, and may have a columnar shape as illustrated in FIG. 1. The term "columnar shape" may be used interchangeably with the term "rod-like shape." Similar to the case of the support member 111, the term "columnar shape" of the connection member 112 as used herein does not have a strict geometrical meaning, and may have irregularities for connection or the like with other members.

The connection member 112 may have a polygonal columnar shape such as a quadrangular columnar shape, or a cylindrical shape.

The material of the connection member 112 is not particularly limited, and one or more materials selected from, for example, resins, metals, and the like may be used. However, depending on the mass or the like of the sheet piece 25, it is preferable that the connection member 112 be highly rigid so as to be able to support the sheet piece 25. Accordingly, depending on the mass or the like of the sheet piece 25, the connection member 112 may be made of metal, and stainless steel, aluminum, or the like may be used. In order to prevent excessive load from being applied to the displacement apparatus 12, the connection member 112 may be formed to have a hollow structure inside or the like.

By displacing the position of the connection member 112 with the displacement apparatus 12, it is possible to displace the positions of the support members 111, which are provided to the connection member 112, and the position of the counterweight 113.

### (2-3) Counterweight

The inventors of the present invention have studied a sampling apparatus in which the sheet piece 25 is supported by the support apparatus 11 including the support members 111 and the connection member 112, the position of the support apparatus 11 is displaced along the height direction by the displacement apparatus 12, and the sheet piece 25 is retained by the support apparatus 11. According to the sampling apparatus, since it is unnecessary to provide an independent means for retaining the sampled sheet piece 25, the installation space for the sampling apparatus can be reduced.

However, when the sheet piece 25 is supported by the support apparatus 11 and the position of the support apparatus 11 is displaced by the displacement apparatus 12, over time the support apparatus 11 tilts in a direction of the support members 111 retaining the sheet piece 25, and a load is applied to a drive portion of the displacement apparatus 12. Further, depending on the tilt angle, the position of the sheet piece 25 on the support members 111 might be displaced, the support members 111 might interfere with the conveying path for the sheet piece 25, or the like.

Therefore, the support apparatus 11 may further include the counterweight 113.

The counterweight 113 can be disposed opposite the second end 111B of the support member 111, with reference to the position of the connection member 112. That is, when viewed along the Y-axis in FIGS. 1 to 4, the second end 111B of the support member 111 and the counterweight 113 are disposed at opposite positions with reference to the connection member 112.

By providing the counterweight 113, the load can be balanced between the support member 111 (and the sheet piece 25 disposed on the support member 111) and the counterweight 113. This prevents the support apparatus 11 from tilting in a direction of the support members 111, thereby preventing a load applied to the displacement apparatus 12, displacement of the position of the sheet piece 25 on the support member 111, interference between the support member 111 and the conveying path 26 for the sheet piece 25, and the like.

The number of counterweights 113 to be provided is not particularly limited and may be one. The support apparatus 11 may include a plurality of counterweights 113 along the longitudinal direction of the connection member 112.

By including, in the support apparatus 11, the plurality of counterweights 113 along the longitudinal direction of the connection member 112, a balance can be easily achieved between the counterweights 113 and the support members 111 and the sheet piece 25 placed on the support members 111 over the entire region where the support members 111 are provided.

The configuration of the counterweight 113 is not particularly limited, and may be, for example, a fixed type in which the position of the weight does not change, or a movable type in which the position of the weight is displaced. That is, as illustrated in FIGS. 1 and 2, the counterweight 113 may have a first moving apparatus 1131 configured to change a distance from the connection member 112, thereby allowing the position of the weight to be movable. The first moving apparatus 1131 is an apparatus configured to move the position of the weight of the counterweight 113 so as to change a distance from the connection member 112 to the weight. When the counterweight 113 includes the first moving apparatus 1131, a balance between the counterweight 113 and the support member 111 and the sheet piece 25 placed on the support member can be controlled with high accuracy. The first moving apparatus 1131 may be a manually operated apparatus configured to move the position of the weight, or may be an automatically operated apparatus configured to move the position of the weight by an actuator or the like.

When the first moving apparatus 1131 is an automatically operated apparatus configured to move the position of the weight, the configuration of the first moving apparatus 1131 is not particularly limited. The configuration of the first moving apparatus 1131 may include a combination of a linear motion mechanism, such as a linear rail (linear guide), a linear shaft, or a linear bush, and a drive apparatus such as a linear motor or another type of motor. The counterweight 113 may also include a control apparatus configured to automatically move the position of the weight and control the tilt based on, for example, the tilt of the support apparatus 11 or the like.

### (3) Displacement Apparatus

The displacement apparatus 12 can displace the position of the support apparatus 11 along the height direction, that is, along the Z-axis.

The arrangement of the displacement apparatus 12 is not particularly limited. For example, the displacement apparatus 12 may be connected to an appropriate portion of the support apparatus 11 so that the position of the support apparatus 11 can be displaced. The displacement apparatus 12 may be, for example, connected to the connection member 112 and disposed below the connection member 112.

By connecting the displacement apparatus 12 to the connection member 112 and displacing the position of the connection member 112, it is possible to displace the positions of the support members 111, which are provided to the connection member 112, and the position of the counterweight 113.

Before sampling is performed, as illustrated in FIG. 3, the displacement apparatus 12 can arrange the support members 111 of the support apparatus 11 below the lower surface 26A of the conveying path 26 for the sheet piece 25. In this case, the support members 111 of the support apparatus 11 can be arranged so as not to interfere with the movable portion of the conveying apparatus 21. When the conveying apparatus 21 is a roller conveyor, the support members 111 can be arranged between the rollers 211 to 220 of the roller conveyor so as to be in parallel with the rollers.

When sampling is performed, the displacement apparatus 12 can lift the support apparatus 11 and move the support members 111 above the upper surface 26B of the conveying path 26. It is preferable that the displacement apparatus 12 adjust or select the position of the support apparatus 11 so that a subsequent sheet piece does not interfere with the support apparatus 11.

After the sampled sheet piece 25 is discharged to the outside by a discharging apparatus 13 or the like, the displacement apparatus 12 can displace the support members 111 of the support apparatus 11 below the lower surface 26A of the conveying path 26 for the sheet piece 25 to prepare for the next sampling.

The configuration of the displacement apparatus 12 is not particularly limited. For example, the displacement apparatus 12 may include one or more types selected from an electric actuator, a hydraulic cylinder, a pneumatic cylinder, and the like. In particular, a pneumatic cylinder is preferable since a high lifting/lowering speed is preferable in order to sample the sheet piece 25 being conveyed.

It is preferable that, as illustrated in FIGS. 3 and 4, the displacement apparatus 12 displace the support apparatus 11 in a vertical direction with respect to the conveying path 26 for the sheet piece 25. By displacing, with the displacement apparatus 12, the support apparatus 11 in a vertical direction with respect to the conveying path 26, an installation space where the sampling apparatus 10 including the support apparatus 11 and the displacement apparatus 12 is installed can be particularly reduced.

The phrase "the displacement apparatus 12 displaces the support apparatus 11 in a vertical direction with respect to the conveying path 26 for the sheet piece 25" means that the support apparatus 11 is displaced in a vertical direction with respect to the upper surface 26B or the lower surface 26A of the conveying path 26. The term "vertical" does not have a strict geometrical meaning, and includes a range that can be regarded as vertical in consideration of the accuracy of the displacement apparatus 12 and the like. Therefore, for example, when an angle between the upper surface 26B or the lower surface 26A of the conveying path 26 and the support apparatus 11 is between 80 degrees and 100 degrees, the support apparatus 11 can be regarded as being vertical. It is preferable that the angle be between 85 degrees and 95 degrees.

The timing at which the displacement apparatus 12 lifts the support apparatus 11 is not particularly limited. For example, the displacement apparatus 12 may be configured to lift the support apparatus 11 after an operator visually confirms that the sheet piece 25 is positioned on the support members 111.

The displacement apparatus 12 may be configured to automatically lift the support apparatus 11 in accordance with a predetermined timing or the like. For example, the displacement apparatus 12 may be configured to lift the support apparatus 11 after a predetermined time elapses after a cutting apparatus 23, which will be described later, is operated. The displacement apparatus 12 may be configured to lift the support apparatus 11 after the position of the sheet piece 25 on the support members 111 is detected by various sensors or the like.

### (4) Discharging Apparatus

The sheet piece 25 sampled by the sampling apparatus 10 of the present embodiment and placed on the support members 111 can also be manually sampled by an operator.

The sampling apparatus 10 may further include the discharging apparatus 13 configured to discharge the sheet piece 25 from the support apparatus 11, the sheet piece 25 being supported by the support apparatus 11 and sampled by being moved above the conveying path 26 for the sheet piece 25 together with the support apparatus 11 by the displacement apparatus 12.

The configuration of the discharging apparatus 13 is not particularly limited. For example, the discharging apparatus 13 may include a plurality of discharging members 132 and a fixing member 131 to which the plurality of discharging members 132 are fixed. The discharging apparatus 13 may include a second moving apparatus 133 configured to move the fixing member 131 along a double-headed arrows A (see FIG. 1). The second moving apparatus 133 is an apparatus configured to move the fixing member 131 and the discharging members 132.

By moving the discharging members 132 by the second moving apparatus 133 through the fixing member 131 and bringing the discharging members 132 into contact with the sheet piece 25. It is possible to move the sheet piece 25, for example, along the Y-axis and discharge the sheet piece 25 from the support apparatus 11. A conveying apparatus for the sampled sheet piece 25 may be disposed in the discharging direction so as to further convey the discharged sheet piece 25 to a desired location.

The configuration of the second moving apparatus 133 is not particularly limited. The second moving apparatus 133 may include a combination of a linear motion mechanism, such as a linear rail (linear guide), a linear shaft, or a linear bush, and a drive apparatus such as a linear motor or another type of motor.

It is preferable that, as illustrated in FIGS. 3 and 4, the discharging apparatus 13 be provided at a position where the discharging apparatus 13 does not interfere with the sheet piece 25 being conveyed along the conveying path 26 by the conveying apparatus 21.

The configuration of the discharging apparatus 13 is not limited to the above configuration. The discharging apparatus 13 may be configured such that, for example, a roller or the like is provided on a surface of the support member 111 facing the sheet piece 25, thereby allowing the sheet piece 25 to be conveyed and discharged along the longitudinal direction of the support member 111.

### (5) Stopper

The sampling apparatus 10 of the present embodiment may further include a stopper 14 provided downstream of the plurality of support members 111 along the conveying path 26 for the sheet piece 25.

The stopper 14 is a member configured to regulate the movement of the sheet piece 25 sampled on the support members 111.

By including the stopper 14 in the sampling apparatus 10, it is possible to prevent the sheet piece 25, which has been sampled by the sampling apparatus 10 of the present embodiment while being conveyed by the conveying apparatus 21, from shifting out of alignment with the surface defined by the plurality of support members 111 due to inertia. This further ensures that the sampling apparatus 10 of the present embodiment can sample the sheet piece 25.

The configuration of the stopper 14 is not particularly limited. The stopper 14 may include a regulating member 141 configured to directly or indirectly contact the sheet piece 25 sampled on the support members 111 and regulate the movement of the sheet piece 25. The configuration of the regulating member 141 is not particularly limited. The regulating member 141 is configured so as to at least regulate the movement of the sampled sheet piece 25, and may include, for example, a sheet-shaped member as illustrated in FIG. 1 and the like. Alternatively, the regulating member 141 may include one or more columnar members or the like.

The stopper 14 may also include an elastic member 142 on a surface of the regulating member 141 facing the sheet piece 25. The elastic member 142 may be suitably formed of a material capable of absorbing impact. For example, various kinds of rubber, sponge, or the like can be used.

By including the elastic member 142 in the stopper 14, it is possible to prevent the sheet piece 25 from being damaged even when the sheet piece 25 comes into contact with the regulating member 141 of the stopper 14.

For example, it is preferable to use the stopper 14 when sampling the sheet piece 25 that easily slips on the support members 111. On the other hand, it is preferable not to use the stopper 14 for the sheet piece 25 that is less slippery and can be easily sampled on the support members 111. This is to prevent the sampled sheet piece 25 from being damaged or the like.

Therefore, the stopper 14 may include a rotating apparatus 143 configured to rotate the regulating member 141, for example, along a double-headed arrow B in FIG. 1 so that the regulating member 141 does not come into contact with the sheet piece 25 when the stopper is not in use. The rotating apparatus 143 is an apparatus for rotating the regulating member 141 and the elastic member 142. The rotation of the regulating member 141 by the rotating apparatus 143 can switch between a state where the sheet piece 25 and the regulating member 141 come into contact with each other and a state where the sheet piece 25 and the regulating member 141 do not come into contact with each other, when the sheet piece 25 on the support members 111 is moved to the position of the stopper 14.

An apparatus capable of rotating the regulating member 141 by a predetermined angle may be used as the rotating apparatus 143. For example, a rotary actuator may be used. In the case where the stopper 14 includes the elastic member 142, it is preferable that the rotating apparatus 143 be configured to rotate the regulating member 141 and the elastic member 142.

The driving source for the rotating apparatus 143 is not particularly limited. For example, a rotary actuator driven by any driving source selected from an electric type, a pneumatic (air) type, or the like may be used. In the case where a pneumatic rotary actuator is used as the rotating apparatus 143 and the sheet piece 25 comes into contact with the regulating member 141 directly or indirectly, the impact is absorbed by the air in the rotary actuator, thereby allowing the rotating apparatus 143 to exhibit an impact absorption function. Therefore, a pneumatic rotary actuator can be preferably used as the rotating apparatus 143.

### (6) Base Frame

The support apparatus 11, the displacement apparatus 12, the discharging apparatus 13, and the stopper 14 may each be independent and separate from one another without being connected. However, as illustrated in FIGS. 3 and 4, a base frame 31 may be provided so that the support apparatus 11, the displacement apparatus 12, the discharging apparatus 13, and the stopper 14 are connected to the base frame 31.

By integrating the support apparatus 11, the displacement apparatus 12, the discharging apparatus 13, and the stopper 14 into a single apparatus with the base frame 31, installation on the conveying apparatus 21 or the like and adjustment of arrangement and the like can be easily performed. The base frame 31 may be provided with a moving apparatus for the frame base, such as casters, as necessary.

### (7) Cutting Apparatus and Upstream Conveying Apparatus

The sampling apparatus 10 of the present embodiment may further include the cutting apparatus 23 and an upstream conveying apparatus 22, which are located upstream of the conveying apparatus 21 described above.

The sampling apparatus 10 of the present embodiment may further include the cutting apparatus 23 configured to cut a sheet 24 into the sheet pieces 25, and the upstream conveying apparatus 22 configured to convey the sheet 24 to be supplied to the cutting apparatus 23. In this case, the conveying apparatus 21 can be disposed downstream of the cutting apparatus 23 along the conveying path 26 for the sheet piece 25. When it is necessary to distinguish the conveying apparatus 21 described above from the upstream conveying apparatus 22, the conveying apparatus 21 may also be referred to as a downstream conveying apparatus.

The sheet 24 is, for example, a strip-shaped semifinished or finished product obtained by molding raw materials, and is an object to be conveyed before being cut into the sheet pieces 25. By cutting the sheet 24, a part of the sheet 24 can be separated as the sheet piece 25. Moreover, by cutting the sheet 24 multiple times, a plurality of sheet pieces 25 can be formed.

The shape of a cutting line for cutting the sheet 24 is not particularly limited. For example, the cutting line can be a cutting line parallel to the width of the sheet 24, that is, a cutting line perpendicular to the conveying direction of the sheet 24. Therefore, the sheet 24 can have a shape longer in the conveying direction than the sheet piece 25 obtained by cutting, for example, a strip shape as described above.

The configuration of the cutting apparatus 23 is not particularly limited. For example, a cutting apparatus configured to cut, along the cutting line parallel to the width direction of the sheet 24, the sheet 24 being conveyed can be used. Specifically, for example, a rotary cutter, a circular saw, or the like can be used.

The cutting line may be, for example, a cutting line parallel to the conveying direction of the sheet 24 or a cutting line having a desired shape. Accordingly, the cutting apparatus 23 is not limited to the above configuration. For example, a cutting apparatus configured to cut the sheet 24 along the cutting line parallel to the conveying direction of the sheet 24 or the cutting line having a desired shape may be used.

The displacement apparatus 12 may be configured to be interlocked with the cutting apparatus 23. For example, after the cutting apparatus 23 cuts the sheet 24 a predetermined number of times, the support apparatus 11 may be lifted by the displacement apparatus 12 after a predetermined time elapses to perform sampling.

The upstream conveying apparatus 22 may be any means capable of at least conveying the sheet 24 and supplying the sheet 24 to the cutting apparatus 23. Thus, the configuration of the upstream conveying apparatus 22 is not particularly limited. For example, one or more types selected from a roller conveyor, a belt conveyor, a chain conveyor, and the like may be used. The above-described conveying apparatus 21 and the upstream conveying apparatus 22 may be the same conveying apparatus or different conveying apparatuses.

### (8) Separating Apparatus and Speed-Reducing Apparatus

In the case where the sampling apparatus 10 of the present embodiment includes the cutting apparatus 23, the sampling apparatus 10 may further include a separating apparatus 27 configured to increase a distance between, for example, the sheet 24 and the sheet piece 25 obtained by cutting the sheet 24 with the cutting apparatus 23 or a distance between the sheet pieces 25.

The separating apparatus 27 and a speed-reducing apparatus 28 described later are illustrated only in FIG. 2 and omitted in the other drawings.

When the sheet 24 is cut by the cutting apparatus 23 into the sheet pieces 25, a distance between the sheet pieces 25, which are obtained by cutting and successively conveyed, is almost zero and very short immediately downstream of the cutting apparatus 23. Therefore, depending on a conveying speed at which the sheet piece 25 is conveyed by the conveying apparatus 21 and the like, a moving speed at which the support apparatus 11 is moved by the displacement apparatus 12 should be increased in some cases so that the support apparatus 11 does not contact the subsequent sheet piece 25 when sampling the sheet piece 25.

To address this, it is preferable that the sampling apparatus 10 further include the separating apparatus 27 configured to increase a distance between the sheet 24 and the sheet piece 25, or a distance between the sheet pieces 25, so that the moving speed of the support apparatus 11 does not have to be excessively increased, thereby particularly facilitating easy sampling.

A specific configuration of the separating apparatus 27 is not particularly limited. For example, the separating apparatus 27 may include a separation control apparatus configured to control a conveying speed of the conveying apparatus 21 for the sheet piece 25 in at least a part of the conveying apparatus 21.

As illustrated in FIG. 2, it is preferable that the separation control apparatus of the separating apparatus 27 control a conveying speed in at least a part of the conveying apparatus 21 so that a conveying speed of the sheet piece 25 is increased, that is, accelerated as compared with a conveying speed in a region upstream of the conveying apparatus 21, for example, a region immediately upstream of the conveying apparatus 21. For example, in the case where the conveying apparatus 21 is a roller conveyor, the separation control apparatus can control at least some of the rollers, such as the rollers 211 and 212, which form the roller conveyor of the conveying apparatus 21, so as to accelerate the conveying speed.

For example, the separating apparatus 27 can increase a distance between the sheet pieces 25 obtained by cutting with the cutting apparatus 23. Therefore, for example, it is preferable that the separation control apparatus control a part of the conveying apparatus 21 so that a conveying speed of the part of the conveying apparatus 21 for the sheet pieces 25 becomes higher than a conveying speed of the upstream conveying apparatus 22 for the sheet 24, the upstream conveying apparatus 22 being disposed upstream of the cutting apparatus 23.

With this configuration of the separation control apparatus, after the sheet piece 25 passes through the cutting apparatus 23 and is supplied to the conveying apparatus 21, the previously supplied sheet piece 25 can be conveyed a considerable distance forward before the next sheet piece 25 is supplied to the conveying apparatus 21. Therefore, the distance between the sheet piece 25 that has already been conveyed by the conveying apparatus 21 and the sheet piece 25 obtained by cutting with the cutting apparatus 23 can be sufficiently increased. In this case, the distance between the sheet 24 and the sheet piece 25 can also be increased.

Therefore, it is preferable that the separation control apparatus control, for example, a conveying speed of at least a part of the conveying apparatus 21 provided between the cutting apparatus 23 and the support apparatus 11. It is more preferable that the separation control apparatus particularly control the conveying speed of the conveying apparatus 21 disposed in a region located immediately downstream of the cutting apparatus 23.

However, the conveying apparatus 21 controlled by the separation control apparatus is not limited to the above-described region. For example, the separation control apparatus can also control the conveying apparatus 21 provided in a region immediately downstream of the support apparatus 11 or the like, where the conveying speed of the sheet piece 25 can be increased without affecting the operation, and where it is required to further increase the distance between the sheet pieces 25.

The separation control apparatus may include a CPU which is a computation processing unit for performing operations necessary for control, a RAM or a ROM which are main storage devices, an auxiliary storage device, an input/output interface, a display device which is an output device, and the like. The CPU, the main storage devices, the auxiliary storage device, the input/output interface, and the output device, which are included in the separation control apparatus, can be connected to each other via a bus. The components included in the separation control apparatus do not all need to be accommodated within the same housing. For example, the auxiliary storage device and the display device may be provided outside the housing. The auxiliary storage device is a storage device such as an SSD or an HDD.

Note that "CPU" is an abbreviation for central processing unit, "RAM" is an abbreviation for random access memory, and "ROM" is an abbreviation for read only memory. In addition, "SSD" is an abbreviation for solid state drive, and "HDD" is an abbreviation for hard disk drive.

Examples of the input/output interface include wired or wireless interfaces for exchanging measurement data and control values. Examples of the input/output interface also include an interface for exchanging control values relating to the conveying speed of the conveying apparatus 21, and the like.

Further, examples of the input/output interface include user interfaces such as a touch panel, a keyboard, or operation buttons for selecting control conditions, and the like.

The separation control apparatus may be implemented by a personal computer (PC) or the like. Accordingly, each component included in the separation control apparatus may be implemented in an information processing apparatus such as a personal computer by cooperation between software and hardware when the CPU executes a program stored in advance. Since a speed-reduction control apparatus described below can have the same configuration, a detailed description thereof will be omitted.

In the case where the sampling apparatus 10 of the present embodiment includes the separation control apparatus and the speed-reduction control apparatus, these apparatuses may be combined into a single control apparatus.

The sampling apparatus 10 of the present embodiment may also include a control apparatus for controlling the operations of the displacement apparatus 12, the first moving apparatus 1131 of the counterweight 113, the second moving apparatus 133 of the discharging apparatus 13, and the rotating apparatus 143 of the stopper 14, and the like. Since this control apparatus may have the same configuration as that described for the separation control apparatus, a detailed description thereof will be omitted. The control apparatus for controlling the displacement apparatus 12 and the like may be integrated into a single control apparatus together with the separation control apparatus and the like. Alternatively, each control apparatus may be provided separately, or a plurality of control apparatuses may be provided by integrating some of the control apparatuses. In the case where the sampling apparatus 10 includes a plurality of control apparatuses, the sampling apparatus 10 of the present embodiment may include wired or wireless signal lines or the like between the control apparatuses so that data such as control values can be exchanged between the control apparatuses.

The sampling apparatus 10 may further include a speed-reducing apparatus 28 configured to reduce a conveying speed of the sheet piece 25 in a region along the conveying path 26 for the sheet piece 25, the region including at least a portion located upstream of the support apparatus 11.

In the sampling apparatus 10 of the present embodiment, the sheet piece 25 being conveyed is supported by the support apparatus 11, and the displacement apparatus 12 lifts the position of the support apparatus 11 to perform sampling. However, depending on the conveying speed of the sheet piece 25, when the sheet piece 25 is retained by the support apparatus 11, the sheet piece 25 might move considerably on the support members 111 of the support apparatus 11 due to the inertia of the sheet piece 25 being conveyed.

Therefore, the sampling apparatus 10 of the present embodiment may include the speed-reducing apparatus 28 configured to reduce a conveying speed of the sheet piece 25 in a region along the conveying path 26 for the sheet piece 25, the region including at least a portion located upstream of the support apparatus 11. By including the speed-reducing apparatus 28 in the sampling apparatus 10, the speed of the sheet piece 25 when the sheet piece 25 is lifted can be reduced, thereby suppressing a large movement of the stopping position of the sheet piece 25 on the support members 111 when the sheet piece 25 is supported by the support apparatus 11 and the displacement apparatus 12.

A specific configuration of the speed-reducing apparatus 28 is not particularly limited. The speed-reducing apparatus 28 may include a speed-reduction control apparatus configured to reduce a conveying speed of conveying apparatus 21 for the sheet piece 25 in a region along the conveying path 26 for the sheet piece 25, the region including at least a portion located upstream of the support apparatus 11.

The control object of the speed-reduction control apparatus is not limited to the conveying apparatus 21 in a portion of a region upstream of the support apparatus 11, and may also include, for example, the conveying apparatus 21 in a region where the support apparatus 11 is disposed, so that the conveying speed of the sheet piece 25 can be adjusted.

The degree to which the conveying speed of the sheet piece 25 is reduced by the speed-reducing apparatus 28 is not particularly limited. For example, it is preferable that the conveying speed be reduced to such an extent that a large movement of the stopping position of the sheet piece 25 on the support members 111 can be suppressed.

In the case where the sampling apparatus 10 of the present embodiment includes the speed-reducing apparatus 28 together with the separating apparatus 27, for example, at least a part of a section of the conveying apparatus 21 immediately downstream of the cutting apparatus 23 can be defined as a separation section. The separating apparatus 27 may include a separation control apparatus configured to control a conveying speed of the conveying apparatus 21 in the separation section.

A section including at least a part of the conveying apparatus 21 between the separation section and the support apparatus 11 is defined as a speed-reducing section. The speed-reducing apparatus 28 may include a speed-reduction control apparatus configured to reduce the conveying speed of the conveying apparatus 21 in the speed-reducing section. In the case where the conveying apparatus 21 is a roller conveyor, the speed-reducing apparatus may include a speed-reduction control apparatus configured to control at least some of the rollers, such as the rollers 213 to 219, which form the roller conveyor serving as the conveying apparatus 21, so as to reduce the conveying speeds of the rollers 213 to 219 in the speed-reducing section.

### (9) Evaluation Apparatus

The sampling apparatus 10 of the present embodiment may further include an evaluation apparatus configured to evaluate the sampled sheet piece 25. The configuration of the evaluation apparatus is not particularly limited. For example, the evaluation apparatus may include one or more types selected from an apparatus configured to measure the size of the sampled sheet piece 25, an apparatus configured to measure a weight of the sampled sheet piece 25, an apparatus configured to measure an angle of a corner of the sampled sheet piece 25, an apparatus configured to measure a specific gravity of the sampled sheet piece 25, an apparatus configured to measure a surface and color of the sampled sheet piece 25, and the like.

According to the sampling apparatus 10 of the present embodiment described above, it is possible to easily sample the sheet piece 25 being conveyed. This ensures that the sheet piece 25 can be sampled and evaluated at a desired timing or predetermined timing, so that defects and the like in the manufacturing process can be detected, thereby contributing to reduce the defect rate.

According to the sampling apparatus 10 of the present embodiment, it is also possible to, over the entire width direction, sample the sheet piece 25 being manufactured and conveyed. Thus, it is possible to evaluate the sampled sheet piece 25 over the entire width of the semi-finished product or the finished product being conveyed in substantially the same manner. In particular, this further ensures that defects and the like in the manufacturing process can be detected, thereby contributing to reduce the defect rate.

Furthermore, according to the sampling apparatus 10 of the present embodiment, it is possible to displace the position of the support apparatus 11 by the displacement apparatus 12 and sample and retain the sheet piece 25 being conveyed along the conveying path 26. That is, since there is no additional apparatus configured to retain the sampled sheet piece 25, it is possible to reduce the installation space and install the sampling apparatus 10 even when there is not enough space on the manufacturing line.

### [Sheet Member Manufacturing Apparatus and Gypsum Building Material Manufacturing Apparatus]

Next, a configuration example of a sheet member manufacturing apparatus and a gypsum building material manufacturing apparatus of the present embodiment will be described.

The sheet member manufacturing apparatus may include a sampling apparatus according to an embodiment of the present disclosure.

For example, a gypsum building material can be manufactured as a sheet member. In this case, the sheet member manufacturing apparatus can be the gypsum building material manufacturing apparatus. Thus, the gypsum building material manufacturing apparatus of the present embodiment may similarly include a sampling apparatus mentioned above.

The sheet member manufacturing apparatus and the gypsum building material manufacturing apparatus of the present embodiment may include various apparatuses necessary for manufacturing the sheet member, in addition to the sampling apparatus 10.

For example, in the case where it is necessary to mix raw materials, the sheet member manufacturing apparatus and the gypsum building material manufacturing apparatus of the present embodiment may include a mixing apparatus (mixer) configured to mix the raw materials. In addition, the sheet member manufacturing apparatus and the gypsum building material manufacturing apparatus of the present embodiment may include a molding apparatus or the like configured to mold and process raw materials, a raw material mixture prepared by the mixing apparatus, a raw material slurry, or the like into a desired shape and size.

Hereinafter, a configuration example of the sheet member manufacturing apparatus and the gypsum building material manufacturing apparatus of the present embodiment will be described based on a case where a sheet member and a gypsum board, which is a gypsum building material, are manufactured.

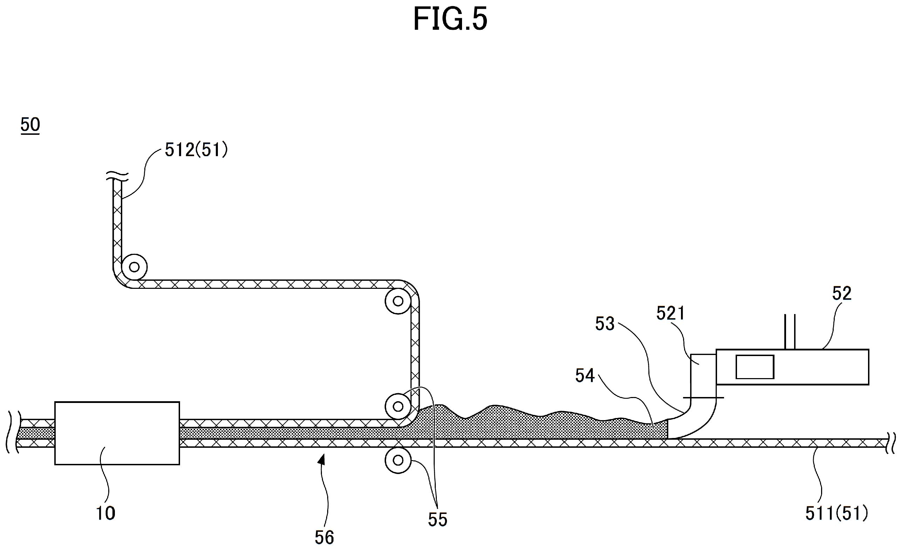

As illustrated in FIG. 5, a gypsum building material manufacturing apparatus 50 may include the sampling apparatus 10 according to an embodiment of the present disclosure. The gypsum building material manufacturing apparatus 50 may further include a mixer 52, a molding apparatus 55, or the like.

A configuration example of the gypsum building material manufacturing apparatus 50 will be described in detail below.

### (1) Mixer

The mixer 52 can prepare a gypsum slurry 54 containing calcined gypsum and water, and can supply the gypsum slurry 54 onto a covering material 51. Thus, the mixer 52 can be disposed at a predetermined position associated with a conveying path for the covering material 51 such as a first gypsum board liner paper 511 and a second gypsum board liner paper 512, for example, above or beside the conveying path. In the mixer 52, calcined gypsum and water, which are raw materials of the gypsum slurry 54, and, if necessary, various additives and foam can be kneaded and mixed to prepare the gypsum slurry 54.

Calcined gypsum, also referred to as calcium sulfate hemihydrate, is an inorganic composition having hydraulic properties. β-type calcined gypsum or α-type calcined gypsum alone, or a mixture of both, can be used as the calcined gypsum. The β-type calcined gypsum can be obtained by calcining, in air, gypsum prepared by mixing any one or any combination of natural gypsum, by-product gypsum, flue gas desulfurization gypsum, recycled gypsum such as gypsum derived from waste gypsum boards, and the like. The α-type calcined gypsum can be obtained by calcining, in water (including steam), gypsum prepared by mixing any one or any combination of natural gypsum, by-product gypsum, flue gas desulfurization gypsum, recycled gypsum such as gypsum derived from waste gypsum boards, and the like.

To manufacture a gypsum building material, it is preferable that the calcined gypsum used as a raw material contain β-type calcined gypsum, and it is more preferable that the main component of the calcined gypsum used as a raw material for the gypsum building material be β-type calcined gypsum. The expression that "the main component of the calcined gypsum used as a raw material for the gypsum building material is β-type calcined gypsum" means that the β-type calcined gypsum occupies more than 50% by mass of the calcined gypsum used as a raw material for the gypsum building material. In the manufacture of the gypsum building material, the calcined gypsum used as a raw material may consist only of β-type calcined gypsum.

In order to manufacture α-type calcined gypsum, it is necessary to calcine dihydrate gypsum such as natural gypsum in water or steam under pressure using an autoclave. In contrast, β-type calcined gypsum can be manufactured by calcining dihydrate gypsum such as natural gypsum in air under atmospheric pressure, and β-type calcined gypsum can be manufactured with higher productivity than α-type calcined gypsum.

Examples of the additives include one or more selected from an adhesive improver, inorganic fibers such as glass fibers, lightweight aggregates, refractory materials such as vermiculite, a setting retarder, a setting accelerator, a water-reducing agent, foaming agents (e.g., sodium alkyl sulfate, alkyl ether sulfate, sodium alkylbenzene sulfonate, and polyoxyethylene alkyl sulfate), bubble size modifiers (e.g., sulfosuccinate-type surfactants), water repellents (e.g., silicone and paraffin), organic carboxylic acids, organic carboxylates, and the like. The adhesive improver is an additive that improves adhesion between a hardened gypsum body (a hardened form of the gypsum slurry) and gypsum board liner paper. Examples of the adhesive improver include starch and polyvinyl alcohol.

The calcined gypsum and some additives, such as solid additives, may also be pre-mixed and stirred to give a mixture serving as a gypsum composition, which is then supplied to the mixer 52.

Foam may be added at a branch port 521 for gypsum slurry, and the gypsum slurry 54 may have a desired density by adjusting the amount of foam added.

### (2) Molding Apparatus

The first gypsum board liner paper 511 and the second gypsum board liner paper 512, which are being conveyed within the gypsum building material manufacturing apparatus 50, reach a molding apparatus 55. At this stage, the gypsum slurry 54 is supplied between the first gypsum board liner paper 511 and the second gypsum board liner paper 512 through a pipe 53 from the mixer 52. Accordingly, a continuous laminate can be formed in which a layer formed of the gypsum slurry 54 is disposed between the first gypsum board liner paper 511 and the second gypsum board liner paper 512.

Specifically, for example, the gypsum slurry 54 having a predetermined density is supplied and deposited on the first gypsum board liner paper 511, which is continuously conveyed. Then, opposite ends of the first gypsum board liner paper 511 in the width direction are folded along predetermined score lines so as to extend upward and then inward, thereby partially wrapping the deposited layer of the gypsum slurry 54. Subsequently, the second gypsum board liner paper 512, which is conveyed at the same speed, can be overlaid on the deposited layer of the gypsum slurry 54 that has been partially wrapped by the first gypsum board liner paper 511. Next, the laminate is passed through a molding apparatus 55 that determines the thickness and width of the gypsum building material. Through the above steps, the gypsum building material can thus be molded. In this case, a layer of the gypsum slurry 54 having a certain density is formed between the first gypsum board liner paper 511 and the second gypsum board liner paper 512.

In this manner, in the molding apparatus 55 of the gypsum building material manufacturing apparatus 50, a molding step of molding the gypsum slurry 54 can be performed, and thus a formed gypsum slurry body 56 can be manufactured.

### (3) Rough Cutting Apparatus, Dryer, and Cutting Apparatus

The gypsum building material manufacturing apparatus 50 of the present embodiment may also be provided with a rough cutting apparatus (not shown), a dryer, a cutting apparatus, and the like, which are located, for example, downstream of the molding apparatus 55, as necessary.

The dryer can reduce excess moisture contained in the formed gypsum slurry body 56.

The rough cutting apparatus can roughly cut the manufactured formed gypsum slurry body 56 to a desired size.

The gypsum building material manufacturing apparatus 50 may include one or more rough cutting apparatuses and cutting apparatuses as necessary. For example, the gypsum building material manufacturing apparatus 50 may include a first cutting apparatus (rough cutting apparatus) configured to roughly cut the manufactured formed gypsum slurry body 56 for the purpose of placing the formed gypsum slurry body 56 in the dryer, or the like. The gypsum building material manufacturing apparatus 50 may also include a second cutting apparatus (cutting apparatus) configured to cut a gypsum board according to the size of the final product.

### (4) Sampling Apparatus

On the downstream side of the molding apparatus 55, a sampling apparatus 10 according to an embodiment of the present disclosure may be provided. In the sampling apparatus 10, a sheet piece 25 being conveyed can be sampled as necessary. The sheet piece 25 that has not been sampled is conveyed by the conveying apparatus 21 and may be further subjected to predetermined processing or treatment as necessary, thereby becoming a sheet member, such as a gypsum building material.

The sampling apparatus 10 of the present embodiment may include the conveying apparatus 21, the cutting apparatus 23, and the like, as described with reference to FIGS. 1, 2, and the like. Therefore, in the sampling apparatus 10, for example, the formed gypsum slurry body 56, which is a sheet 24 formed by the molding apparatus 55, can be cut into sheet pieces of a desired size by the cutting apparatus. The sampling apparatus 10 of the present embodiment can then sample and evaluate the sheet pieces 25 being conveyed by the conveying apparatus 21, for example, semi-finished products of gypsum building materials.

Calcined gypsum (hemihydrate gypsum) undergoes hydration to produce needle-shaped crystals of dihydrate gypsum, thereby setting, solidifying, and hardening. Therefore, when the sampling apparatus 10 includes the cutting apparatus 23 and the formed gypsum slurry body 56 is cut by the cutting apparatus 23 after being produced by the molding apparatus 55, it is preferable that the hydration of the calcined gypsum has sufficiently progressed before the formed gypsum slurry body 56 is cut by the cutting apparatus 23. Accordingly, it is preferable to select a distance (conveying distance) between the molding apparatus 55 and the cutting apparatus 23 such that the formed body has a hardness suitable for cutting by the cutting apparatus 23.

In this manner, between the molding apparatus 55 of the gypsum building material manufacturing apparatus 50 shown in FIG. 5 and the cutting apparatus 23 included in the sampling apparatus 10, the formed gypsum slurry body 56 obtained by the molding apparatus 55 can be hardened. The cutting apparatus 23 can then cut the hardened body into a desired size. The cutting apparatus 23 may also be provided independently from the sampling apparatus 10.

The configuration of the sampling apparatus 10 has already been described above, and therefore, a detailed description thereof will be omitted herein.

The number of sampling apparatuses 10 included in the sheet member manufacturing apparatus and the gypsum building material manufacturing apparatus 50 of the present embodiment is not limited to one, and a desired number of sampling apparatuses 10 may be provided at positions on the line of the manufacturing apparatus where sampling or evaluation is required.

Although the case of manufacturing a gypsum board as a sheet member and a gypsum building material has been described as an example, the present invention is not limited to such a case. For example, by changing the covering material (surface material) from gypsum board liner paper to a glass fiber nonwoven fabric (glass tissue), a glass mat, or the like, and by disposing the covering material on or near the surface so as to be embedded in the surface, various types of gypsum building materials can be manufactured, such as a glass mat gypsum board and a gypsum board containing glass fiber nonwoven fabric.

Furthermore, various types of sheet members other than gypsum building materials can also be manufactured, including members for electronic components, other ceramic products such as various structural materials, and resin products.

In the case where sheet members other than the above-described gypsum building materials, such as other ceramic products (e.g., slag gypsum boards or cement boards) or resin products, are manufactured, the configurations of the mixing apparatus and the molding apparatus are not limited to those described above. For example, a mixing apparatus and a molding apparatus having suitable configurations may be used according to the raw materials and the product to be manufactured. Further, various apparatuses or means may also be provided as necessary.

According to the sheet member manufacturing apparatus and the gypsum building material manufacturing apparatus 50 of the present embodiment described above, the sampling apparatus 10 according to an embodiment of the present disclosure is included. Therefore, it becomes possible to easily sample the sheet piece 25 being conveyed. This ensures that the sheet piece 25 can be sampled and evaluated at a desired timing or predetermined timing, so that defects and the like in the manufacturing process can be detected, thereby contributing to reduce the defect rate.

The sampled sheet piece 25 can also be sampled over the entire width direction. Thus, it is possible to evaluate the sampled sheet piece 25 over the entire width of the semi-finished product or the finished product being conveyed in substantially the same manner. In particular, this further ensures that defects and the like in the manufacturing process can be detected, thereby contributing to reduce the defect rate.

Further, the sampling apparatus 10 can displace the position of the support apparatus 11 by the displacement apparatus 12, thereby sampling and retaining the sheet piece 25 being conveyed along the conveying path 26. That is, since there is no additional apparatus configured to retain the sampled sheet piece 25, it is possible to reduce the installation space and install the sampling apparatus 10 even when there is not enough space on the manufacturing line.

### [Remarks]

(1) According to an aspect of the present disclosure, a sampling apparatus includes:
   a support apparatus configured to support a sheet piece from below, the sheet piece being conveyed by a conveying apparatus; and
   a displacement apparatus configured to displace a position of the support apparatus along a height direction, in which
   the support apparatus includes
      a connection member having a columnar shape,
      a plurality of support members having a columnar shape, the support members arranged along a longitudinal direction of the connection member, and
      a counterweight provided to the connection member,
   the support members are disposed such that the longitudinal direction of the connection member intersects a longitudinal direction of the support members,
   the support members have first ends along the longitudinal direction of the support members, and second ends located opposite the first ends,
   the first ends are fixed to the connection member, and
   the counterweight is disposed opposite the second ends of the support members, with reference to a position of the connection member.
(2) In (1), the counterweight may include a first moving apparatus configured to change a distance from the connection member.
(3) In (1) or (2), the support apparatus may include a plurality of the counterweights along the longitudinal direction of the connection member.
(4) In any one of (1) to (3), the displacement apparatus may be connected to the connection member and disposed below the connection member.
(5) In any one of (1) to (4), the displacement apparatus may displace the support apparatus 11 in a vertical direction with respect to a conveying path for the sheet piece.
(6) In any one of (1) to (5), the support members may include a friction member on at least a part of a portion in contact with the sheet piece.
(7) In any one of (1) to (6), the plurality of the support members may be fixed to the connection member such that a support member of the support members, which is located downstream in a conveying path for the sheet piece, is positioned higher than a support member of the support members, which is located upstream in the conveying path for the sheet piece.
(8) In any one of (1) to (7), the sampling apparatus may include a discharging apparatus configured to discharge the sheet piece from the support apparatus, the sheet piece being supported by the support apparatus and sampled by being moved above the conveying path for the sheet piece together with the support apparatus by the displacement apparatus.
(9) In any one of (1) to (8), the sampling apparatus may include a stopper provided downstream of the plurality of the support members along the conveying path for the sheet piece.
(10) In any one of (1) to (9), the sampling apparatus may further include:
   a cutting apparatus configured to cut a sheet into the sheet piece; and
   an upstream conveying apparatus configured to convey the sheet to be supplied to the cutting apparatus, in which
   the conveying apparatus may be disposed downstream of the cutting apparatus along the conveying path for the sheet piece.
(11) In (10), the sampling apparatus may further comprising: a separating apparatus configured to increase a distance between the sheet and the sheet piece obtained by cutting with the cutting apparatus or a distance between the sheet pieces and a subsequent piece.
(12) In any one of (1) to (11), the sampling apparatus may further include: a speed-reducing apparatus configured to reduce a conveying speed of the sheet piece in a region along a conveying path for the sheet piece, the region including at least a portion located upstream of the support apparatus.
(13) In any one of (1) to (12), the conveying apparatus may be a roller conveyor.
(14) A sheet member manufacturing apparatus according to an aspect of the present disclosure includes the sampling apparatus of any one of (1) to (13).
(15) A gypsum building material manufacturing apparatus according to an aspect of the present disclosure includes the sampling apparatus of any one of (1) to (13).

Although the sampling apparatus, the sheet member manufacturing apparatus, and the gypsum building material manufacturing apparatus have been described above in the embodiments and the like, the present invention is not limited to these embodiments and the like. Various modifications and changes can be made within the scope of the gist of the present invention described in the claims.

This application claims priority based on Japanese Patent Application No. 2023-169830 filed with the Japan Patent Office on September 29, 2023, and the entire contents of Japanese Patent Application No. 2023-169830 are incorporated in this international application.

### [Reference Signs List]

- 10: Sampling apparatus
- 11: Support apparatus
- 111: Support member
- 111A: First end
- 111B: Second end
- 1111: Support member
- 1112: Support member
- 112: Connection member
- 113: Counterweight
- 1131: First moving apparatus
- 12: Displacement apparatus
- 13: Discharging apparatus
- 131: Fixing member
- 132: Discharging member
- 133: Second moving apparatus
- 14: Stopper
- 141: Regulating member
- 142: Elastic member
- 143: Rotating apparatus
- A: Double-headed arrow
- B: Double-headed arrow
- 20: Block arrow
- 21: Conveying apparatus
- 211: Roller
- 212: Roller
- 213: Roller
- 214: Roller
- 215: Roller
- 216: Roller
- 217: Roller
- 218: Roller
- 219: Roller
- 220: Roller
- 22: Upstream conveying apparatus
- 23: Cutting apparatus
- 24: Sheet
- 25: Sheet piece
- 26: Conveying path
- 26A: Lower surface
- 26B: Upper surface
- 27: Separating apparatus
- 28: Speed-reducing apparatus
- 31: Base frame
- 50: Gypsum building material manufacturing apparatus
- 51: Covering material
- 511: First gypsum board liner paper
- 512: Second gypsum board liner paper
- 52: Mixer
- 521: Branch Port
- 53: Pipe
- 54: Gypsum slurry
- 55: Molding apparatus
- 56: Formed gypsum slurry body

## Claims

1. A sampling apparatus, comprising:
a support apparatus configured to support a sheet piece from below, the sheet piece being conveyed by a conveying apparatus; and
a displacement apparatus configured to displace a position of the support apparatus along a height direction, wherein the support apparatus includes
a connection member having a columnar shape,
a plurality of support members having a columnar shape, the support members arranged along a longitudinal direction of the connection member, and
a counterweight provided to the connection member,
the support members are disposed such that the longitudinal direction of the connection member intersects a longitudinal direction of the support members,
the support members have first ends along the longitudinal direction of the support members, and second ends located opposite the first ends,
the first ends are fixed to the connection member, and
the counterweight is disposed opposite the second ends of the support members, with reference to a position of the connection member.

2. The sampling apparatus according to claim 1, wherein
the counterweight includes a first moving apparatus configured to change a distance from the connection member.

3. The sampling apparatus according to claim 1 or 2, wherein
the support apparatus includes a plurality of the counterweights along the longitudinal direction of the connection member.

4. The sampling apparatus according to claim 1 or 2, wherein
the displacement apparatus is connected to the connection member and disposed below the connection member.

5. The sampling apparatus according to claim 1 or 2, wherein
the displacement apparatus is configured to displace the support apparatus in a vertical direction with respect to a conveying path for the sheet piece.

6. The sampling apparatus according to claim 1 or 2, wherein
the support members include a friction member on at least a part of a portion in contact with the sheet piece.

7. The sampling apparatus according to claim 1 or 2, wherein
the plurality of the support members are fixed to the connection member such that a support member of the support members, which is located downstream in a conveying path for the sheet piece, is positioned higher than a support member of the support members, which is located upstream in the conveying path for the sheet piece.

8. The sampling apparatus according to claim 1 or 2, further comprising:
a discharging apparatus configured to discharge the sheet piece from the support apparatus, the sheet piece being supported by the support apparatus and sampled by being moved above a conveying path for the sheet piece together with the support apparatus by the displacement apparatus.

9. The sampling apparatus according to claim 1 or 2, further comprising; a stopper provided downstream of the plurality of the support members along a conveying path for the sheet piece.

10. The sampling apparatus according to claim 1 or 2, further comprising:
a cutting apparatus configured to cut a sheet into the sheet piece; and
an upstream conveying apparatus configured to convey the sheet to be supplied to the cutting apparatus, wherein
the conveying apparatus is disposed downstream of the cutting apparatus along a conveying path for the sheet piece.

11. The sampling apparatus according to claim 10, further comprising:
a separating apparatus configured to increase a distance between the sheet and the sheet piece obtained by cutting with the cutting apparatus or a distance between the sheet pieces and a subsequent sheet piece.

12. The sampling apparatus according to claim 1 or 2, further comprising:
a speed-reducing apparatus configured to reduce a conveying speed of the sheet piece in a region along a conveying path for the sheet piece, the region including at least a portion located upstream of the support apparatus.

13. The sampling apparatus according to claim 1 or 2, wherein the conveying apparatus is a roller conveyor.

14. A sheet member manufacturing apparatus, comprising:
the sampling apparatus of claim 1 or 2.

15. A gypsum building material manufacturing apparatus, comprising:
the sampling apparatus of claim 1 or 2.
